# EUROPEAN PATENT APPLICATION

(11) **EP 2 905 997 A1**
(43) Date of publication of application: **12.08.2015**
(21) Application number: 14250021.4
(22) Date of filing: 06.02.2014
(51) Int. Cl.: H04W 48/16

(54) **Method and apparatus for determining a network search parameter in a mobile communications network**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

The present invention provides a method for more efficiently managing a mobile communications network by varying the frequency with which a mobile terminal searches for a home network in accordance with a condition of the mobile terminal.

## Description

The present invention relates to a method of operating a mobile communications network, and in particular to a method of operating a mobile communications network which comprises a plurality of microcells alongside other mobile communications networks which comprise a plurality of macrocells.

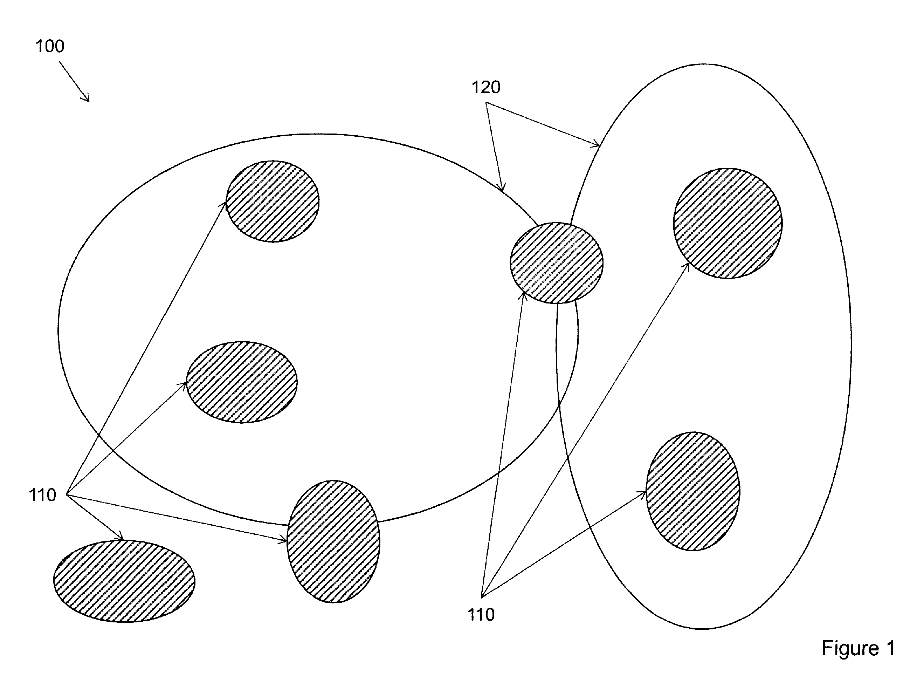

Figure 1 shows a schematic depiction of a mobile communications network 100 which comprises a first plurality of microcells 110 and a second plurality of macrocells 120. One macrocell will cover a substantially larger area than a microcell and thus it will be appreciated that the network 100 may comprise many more microcells than macrocells. Operators of conventional mobile communications networks deploy microcells in areas where there are high levels of network use, for example in city centres, shopping malls, transport interchanges. However, there is the possibility that a first organisation is operating the plurality of microcells and that a second organisation is operating the plurality of macrocells. In such a scenario, customers of the first organisation would have their calls and data sessions routed via a microcell when they are within the coverage of a microcell. When the customers were outside of the range of a microcell then their calls and data sessions would be routed via a macrocell, with a roaming agreement being in place between the first and second organisations. Thus, it can be seen that the first organisation will be motivated for its customers to connect via a microcell in preference to via a macrocell whenever possible. Firstly, it is likely that users connected via a microcell will experience a better throughput of data (as typically there will be fewer users in a microcell than in a macrocell and thus the bandwidth available within a microcell is likely to be greater than that within a macrocell on a per user basis). Furthermore, there is a commercial driver for the first organisation as it will be cheaper to route data via the microcells as it will not have to pay roaming charges to the second organisation for routing data via the macrocells.

According to a first aspect of the present invention there is provided a method of operating a mobile communications network, the method comprising the steps of: a) determining a network search parameter value for a mobile terminal, the value of the network search parameter being determined in accordance with a condition of the mobile terminal; and b) transmitting the network search parameter value to the mobile terminal. The method may comprise the further steps of; c) periodically re-determining the value of the network search parameter; and d) transmitting the network search parameter value determined in step c) to the mobile terminal. The condition of the mobile terminal may comprise the battery level: the value of the network search parameter may increase as the battery level decreases.

According to a second aspect of the present invention there is provided a tangible data carrier for use in a computing device, the data carrier comprising computer executable code which, in use, performs a method as described above.

According to a third aspect of the present invention there is provided an apparatus for use in a mobile communications network, the apparatus, in use, being configured to i) determine a network search parameter value for a mobile terminal, the value of the network search parameter being determined in accordance with a condition of the mobile terminal; and ii) transmit the network search parameter value to the mobile terminal. The apparatus may be further configured to, in use; iii) periodically re-determine the value of the network search parameter in accordance with a condition of the mobile terminal; and iv) transmit the network search parameter value determined in step iii) to the mobile terminal.

Embodiments of the present invention will now be described, by way of example only, with reference to the accompanying drawings in which:
Figure 1 shows a schematic depiction of a mobile communications network which comprises a first plurality of microcells and a second plurality of macrocells; and
Figure 2 shows a schematic depiction of a user equipment (UE) and the Mobility Management Entity (MME) when the present invention is used in the context of LTE.

Mobile networks, for example as described above with reference to Figure 1, are often referred to as Public Land Mobile Networks (PLMNs). A mobile terminal will have a Home PLMN (HPLMN) which the terminal will connect to in preference to all other PLMNs. When the mobile terminal is outside of the coverage of the HPLM then it will connect to another network, known as a visited PLMN (VPLMN), in a process referred to as roaming. The VPLMN may be selected randomly from the PLMNs which are available to the mobile terminal, or there may be one or more higher priority PLMNs which will be selected by the mobile terminal in preference to other PLMNs.

When a mobile terminal is connected to a VPLMN it will occasionally search for its home PLMN, or one of the HPLMN's preferred PLMNs (PPLMN). This search is known as a higher priority PLMN search. Each mobile terminal will have a fixed parameter, T, which is normally programmed into its SIM card. The parameter T is a multiple of 6 minutes and the default value, which is typically used in practice, is 60 minutes. The mobile terminal will perform the search for its home PLMN at the frequency determined by the value of T. The default value of 60 minutes is typically used as it can minimise ping-pong effects, that is a terminal making repeated transfers between a first and a second network, and also prevents excessive battery consumption caused by searching for a higher priority PLMN.

The network that a mobile terminal is connected to can over-ride the value of the parameter T if it is determined that searches are being made too frequently. In such a case, the network can issue a MinimumPeriodicSearchTimer value to the mobile terminal. If the MinimumPeriodicSearchTimer value is greater than the value of the T parameter then the MinimumPeriodicSearchTimer value will be used to determine the frequency of searches for the home PLMN.

In the following discussion, a number of examples will be provided to show how the MinimumPeriodicSearchTimer can be adjusted. As this invention allows the network operator to determine the frequency of PLMN searches, the T parameter in the mobile terminal SIM should be set to its minimum value. The current standards have a minimum value of 6 minutes but it will be understood that this minimum value could be reduced further. In the absence of such limitations it will be understood that the T parameter value could be ignored and the frequency of PLMN searches be determined entirely based on the MinimumPeriodicSearchTimer parameter communicated from the network operator to a mobile terminal.

Table 1 below shows how the value of the MinimumPeriodicSearchTimer parameter can be varied with time. As can be seen from Table 1, searches can be made on a more frequent basis shortly after a mobile terminal has connected to a VPLMN. As the time that the mobile terminal has been connected to the VPLMN increases then the time between successive PLMN searches will increase. This is based on the fact that the failure of the more frequent PLMN searches to find the HPLMN (or a PPLMN) is indicative that the mobile terminal is not near to the HPLMN so the PLMN search frequency may be reduced. It will be understood that the time and MinimumPeriodicSearchTimer parameter values shown below in Table 1 are merely exemplary and that other values may be used as long as the MinimumPeriodicSearchTimer parameter values increase with time.

**Table 1 : Variation of MinimumPeriodicSearchTimer parameter with time.**

| **Time (minutes) from entering VPLMN** | **Issue new MinimumPeriodicSearchTimer value of** |
|---|---|
| 0 | 2 |
| 12 | 6 |
| 36 | 12 |
| 120 | 60 |

Compared to a conventional mobile communications network using a fixed value for the PLMN search frequency, this embodiment of the present invention offers significant benefits. Overall battery usage is reduced (if the final value is larger than the fixed period that would have otherwise been used) when not in coverage of a preferred PLMN, yet the likely time to discover a preferred PLMN is quicker on average. In this embodiment the network operator will determine appropriate parameter values in order to balance the compromise between fast searches vs the unwanted ping-pong effect and the reduction in battery life, based on testing.

Other methods of determining the MinimumPeriodicSearchTimer parameter value will now be described. The increasing of MinimumPeriodicSearchTimer with time can be implemented without any reference to the state or condition of the mobile terminals. The following methods rely, to some extent, on monitoring one or more parameters from one or more mobile terminals. It will be understood that the method by which these parameters are reported by the mobile terminals is not of relevance to the present invention. Further data and or parameters which may be used to determine the value of MinimumPeriodicSearchTimer may be generated or collected within the network.

**Table 2: Variation of MinimumPeriodicSearchTimer value with time and number of previous switches**

| **Time (minutes) from entering VPLMN** | **Issue new MinimumPeriodicSearchTimer value of** | | |
|---|---|---|---|
| | If 2 or more PLMN switch in X minutes | If 1 PLMN switch in X minutes | If no PLMN switch in X minutes |
| 0 | 12 | 6 | 2 |
| 12 | 12 | 12 | 6 |
| 36 | 12 | 12 | 12 |
| 120 | 60 | 60 | 60 |

Table 2 shows an example of how the value of MinimumPeriodicSearchTimer may vary in accordance with the time for which a mobile terminal has been connected to a VPLMN and also the number of PLMN switches that have been made in a predetermined time period. The predetermined time period may have a value between 1 and 30 minutes, although larger values may be used.

It can be seen that mobile terminals which have made a greater number of recent network switches will search less frequently than mobile terminals which have made fewer (or no) recent network switches. By determining the MinimumPeriodicSearchTimer in the manner described with reference to Table 2, the unwanted effects of too many frequent network switches (e.g. excessive battery usage and potential drop on quality of experience (QoE)) can be reduced whilst still giving users a greater opportunity to switch from a VPLMN to the HPLMN where it is available.

Mobility history for a mobile terminal in idle mode is not standardised so the data on the timing and number of previous switches could come from a network management system, in either the home or visited network, or from the mobile terminal itself.

**Table 3: Variation of MinimumPeriodicSearchTimer value with location of mobile terminal**

| **Issue new MinimumPeriodicSearchTimer value of** | | |
|---|---|---|
| Where no HPLMN/PPLMN expected | Where HPLMN/PPLMN edge expected | Within expected coverage of HPLMN/PPLMN |
| 255 | 30 | 2 |

Table 3 shows an exemplary set of MinimumPeriodicSearchTimer values which vary in accordance with the location of the mobile terminal. Such a method is of use as the location of the microcells and macrocells are known and is unlikely to vary. If a mobile terminal is within expected coverage of the HPLMN (or a PPLMN) then it will be preferred that the mobile terminal switch from a VPLMN to the HPLMN quickly. Similarly, if it can be determined that the mobile terminal is outside the coverage of the HPLMN then HPLMN searches should be carried out infrequently to reduce battery drainage. It will be understood that the location of the mobile network may be determined by the network, for example using well known triangulation methods, or by the mobile terminal reporting its own location, for example based on GPS circuitry within the terminal. Mobile terminals are likely, by definition, to vary their location and thus the terminal location should be determined on a periodic basis, for example every 30 minutes, and the MinimumPeriodicSearchTimer determined accordingly.

Table 4 shows an exemplary set of MinimumPeriodicSearchTimer values for a further method in which the values are determined in accordance with both the location of the mobile terminal and the time since it connected to the VPLMN. Such a hybrid approach prevents the unwanted effects of regular PLMN searching (i.e. excessive battery usage) in the event that it is not possible to switch to the HPLMN despite the location of the mobile terminal indicating that such a switch is feasible.

**Table 4: Variation of MinimumPeriodicSearchTimer value with time and location of mobile terminal**

| **Time (minutes) from entering VPLMN** | **Issue new MinimumPeriodicSearchTimer value of** | | |
|---|---|---|---|
| | Where no HPLMN/PPLMN expected | Where HPLMN/PPLMN edge expected | Within expected coverage of HPLMN/PPLMN |
| 0 | 60 | 6 | 2 |
| 12 | 60 | 12 | 6 |
| 36 | 60 | 12 | 12 |
| 120 | 255 | 60 | 60 |

Table 5 shows a further example of how MinimumPeriodicSearchTimer values can be determined, in this case in accordance with a condition of the mobile terminal, for example the remaining battery charge. The battery condition may be reported periodically by the mobile terminal, or the network may poll the terminal periodically to obtain the data. Thus, the search frequency may be adjusted in order to maintain battery life by making searches less frequent as battery life decreases.

**Table 5: Variation of MinimumPeriodicSearchTimer value with battery condition**

| **Battery lifetime at most recent update** | **Issue new MinimumPeriodicSearchTimer value of** |
|---|---|
| > 50% | 2 |
| 50% > 25% | 6 |
| 25% > 15% | 60 |
| 15% > | 255 |

The way battery life is reported is likely to be vendor specific. Battery life may then be reported by methods such as a percentage of expected battery life remaining, as descriptors such as low/medium/high, or as a number of mW hours remaining. The operator may also use knowledge of the power consumption behaviours of various handsets and/or users when deciding on the appropriate action.

The method described above with respect to Table 5 may also be used in conjunction with the other methods described above so that the MinimumPeriodicSearchTimer value indicated by the battery level may act as a threshold so that other methods may be used to determine the MinimumPeriodicSearchTimer but that value would be only be used if it indicated a MinimumPeriodicSearchTimer value greater than that indicated by Table 5 (that is, searches would only be performed at a lower frequency than that indicated by Table 5).

Table 6 shows a yet further set of MinimumPeriodicSearchTimer values, which are determined in accordance with one or more user preferences.

**Table 6: Variation of MinimumPeriodicSearchTimer with user preference**

| **Battery lifetime at most recent update** | **Issue new MinimumPeriodicSearchTimer value of** | | | |
|---|---|---|---|---|
| | Where user wants to maximise battery life at all costs | Where user wants to minimise roaming charges at all costs | User concerned about battery more than roaming | User concerned about roaming more than battery |
| > 50% | 255 | 2 | 6 | 2 |
| 50% > 25% | 255 | 2 | 12 | 6 |
| 25% > 15% | 255 | 2 | 60 | 12 |
| 15% > | 255 | 2 | 255 | 60 |

Table 6 shows an example where the user is given the option from selecting from 4 profiles which indicate their preferences, for example in prioritising battery life over the cost of roaming (which may be incurred by using a VPLMN and is likely to be passed on to the user by a network operator) and *vice versa.* The MinimumPeriodicSearchTimer values are then determined in accordance with the selected profiles, as can be seen from Table 6.

It will be understood that other schemes for determining MinimumPeriodicSearchTimer values in accordance with user preferences may be devised. For example, a user may be able to send real time QoE data to the network (for example, the user's mobile terminal may run a QoE reporting application), and possibly also the reasons for a given QoE, for example the fact that the battery is running low, or that the battery is draining quickly. The data from such reports may then be used to determine a MinimumPeriodicSearchTimer value.

A simple example could be to set:
- Minimum possible value for MinimumPeriodicSearchTimer=2 mins
- Maximum possible value for MinimumPeriodicSearchTimer=240 mins
- Start MinimumPeriodicSearchTimer value = 6 minutes
- when User reports decrease in QoE due to battery issues, double the MinimumPeriodicSearchTimer value
- when User reports QoE drop due to high amount of roaming charges, halve the MinimumPeriodicSearchTimer value
with the MinimumPeriodicSearchTimer value being kept within the bounds set by the maximum and minimum values.

It will be understood that such a preference-based approach could also incorporate some of the mechanisms described above, i.e. setting a threshold value based on battery level, varying the MinimumPeriodicSearchTimer value in accordance with the terminal location or time connected to the VPLMN, etc.

Table 7 shows a still further example of how the MinimumPeriodicSearchTimer value can be varied in the event of a failure of the HPLMN. If one or more of the microcells which are part of the HPLMN were to fail for a short period of time then this failure can be signalled to the operator of the VPLMN (or VPLMNs) to which the mobile terminals will connect (the operators of the VPLMN(s) may be able to infer the failure of the HPLMN based on the sudden number of roaming connections being made in one or more concentrated locations).

**Table 7: Variation of MinimumPeriodicSearchTimer with network availability**

| **Probability that HPLMN now available in area** | **Issue new MinimumPeriodicSearchTimer value of** |
|---|---|
| > 95% | 2 |
| 95% > 50% | 6 |
| 50% > 5% | 20 |
| 5% > | 255 |

If the mobile terminal were to determine the MinimumPeriodicSearchTimer value in accordance with some of the methods discussed above then there may be many frequent searches made even though there may be no HPLMN to switch to. Thus, if the MinimumPeriodicSearchTimer values are determined as set out in Table 7 then when there is a very low likelihood of the HPLMN being available (i.e. very shortly after failure) then there is a very high MinimumPeriodicSearchTimer value, which will reduce as the likelihood of the HPLMN being available increases. The likelihood of the HPLMN being available may be inferred based on the time since the failure. When the service is restored then this information can be sent to the VPLMN so that a very low MinimumPeriodicSearchTimer value is transmitted to the mobile terminals so that the mobile terminals can swiftly re-connect to the HPLMN.

Table 8 shows a variant of the method discussed above with respect to Table 7, in which the determination of the MinimumPeriodicSearchTimer value is also made with respect to the number of mobile devices which are be looking to switch back to the HPLMN. Such control of the search frequency can prevent too much signalling from occurring in a short space of time.

**Table 8: Variation of MinimumPeriodicSearchTimer with network availability and number of terminals requiring to switch to the HPLMN.**

| **Probability that HPLMN now available in area** | **Issue new MinimumPeriodicSearchTimer value of** | | | |
|---|---|---|---|---|
| | Number of devices looking for HPLMN >50 | Number of devices looking for HPLMN 50<20 | Number of devices looking for HPLMN 20<10 | Number of devices looking for HPLMN <10 |
| > 95% | 60 | 6 | 6 | 2 |
| 95% > 50% | 60 | 20 | 12 | 6 |
| 50% > 5% | 120 | 60 | 60 | 20 |
| 5% > | 255 | 255 | 255 | 60 |

In the examples described above, the network would have to go into connected mode in order to be able to receive parameter values, or other similar data from one or more mobile terminals. This connection may be initiated either by network or by the mobile terminal. Data could be transferred to the network either during the next scheduled connection or a connection may be initiated for the purpose of transferring parameters. The signalling overhead required to make such a connection may be a factor which is taken into account when determining the frequency of updates. It will be understood that parameters could also be generated from within the network, either a VPLMN or a HPLMN. These parameters may then be reported to a base station which is in communication with the mobile terminal.

The determination of a MinimumPeriodicSearchTimer value may be made in a distributed manner, that is the values are calculated for each mobile terminal by the respective base station. Alternatively, centralised calculations may be made, with the parameter values being issued to all the respective mobile terminals, for example from the Mobility Management Entity (MME). The parameters may be transmitted to the mobile terminals using a non-access stratum (NAS) message, which allows the parameter to be sent to one or more terminals as required.

In some of the methods discussed above, the determination of a value of MinimumPeriodicSearchTimer is based on monitoring one or more parameters. These parameters would typically come from the mobile terminal. It will be understood that the specific manner in which these parameters are reported is not relevant to the operation of the present invention. For example an application could run on the phone, which sends periodic or threshold based updates, to an application server. The application server would then send the relevant information to the base station (or eNodeB in the context of LTE networks). An alternative could be to upgrade the specification of logged minimisation of drive testing (MDT) reporting. After each update a network may decide to take action to update MinimumPeriodicSearchTimer.

The granularity of HPLMN searching in 3GPP can only go down to multiples of 6 minutes at the moment. The present invention makes it possible to determine MinimumPeriodicSearchTimer values with smaller granularities which could be fed into 3GPP standardisation. It will be understood that the present invention could be used within the context of the present standards with a value of MinimumPeriodicSearchTimer being determined in a manner as described and then being rounded to the nearest multiple of 6 minutes.

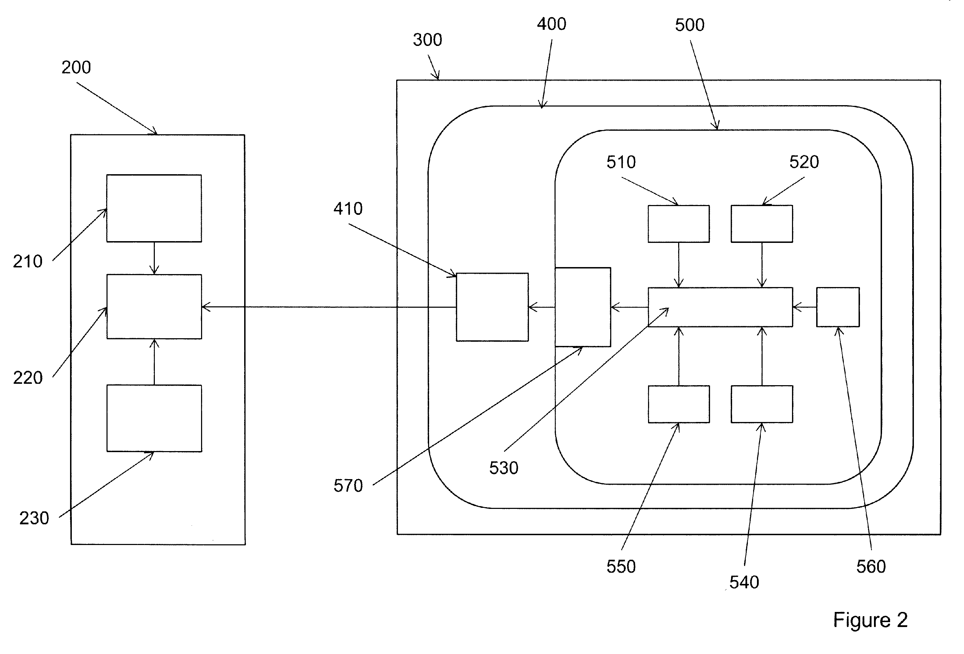

Figure 2 shows a schematic depiction of a user equipment (UE) 200 and the Mobility Management Entity (MME) 300 when the present invention is used in the context of LTE. As will be understood by those who are skilled in the relevant technical field, the communications between the UE and the MME will be routed via the eNodeB which is omitted from Figure 2 for the sake of clarity.

The UE 200 comprises a SIM 210, PLMN search function 220 and user preferences 230. The MME 300 controls a number of different UE control functions and uses the NAS (non-access stratum) 400. The NAS is a functional layer in the LTE protocol stacks which is used to carry dialogue between the UE and the network nodes. The NAS will store a plurality of management object parameters 410 for transmission to the UEs. The various functions and entities required to implement the present invention 500 comprise a UE timer 510, look-up table 520, a MinimumPeriodicSearchTimer algorithm 530, operator preferences 540, UE capabilities 550, user preferences 560 and a MinimumPeriodicSearchTimer update function 570.

The UE SIM 210 stores a value for T, which can determine the frequency of PLMN searches if it is less than the MinimumPeriodicSearchTimer parameter value. It will be understood that this is a feature of the present standards and that these standards could be modified so that the MinimumPeriodicSearchTimer parameter value provided by the network operator takes priority over the T parameter value stored in the SIM. The SIM also stores data regarding the HPLMN and one or more PPLMNs. The PLMN search function carries out the search for a PLMN and is activated in accordance with the MinimumPeriodicSearchTimer parameter value determined as described above. User preferences 230 store a number of data parameters and measurements which can be reported to the network periodically, as described above. These parameters may include, for example, battery condition, UE location, QoE, QoE preferences, etc. and historical values and trends for one or more of these parameters and values.

As described above, the MinimumPeriodicSearchTimer algorithm 530 will determine a value for the MinimumPeriodicSearchTimer parameter based on the inputs received from one or more of the UE timer 510, operator preferences 540, UE capabilities 550, and the user preferences 560. The algorithm may be prompted to retrieve a MinimumPeriodicSearchTimer value from the look-up table 520 dependent on the outcome of the determination. It will be understood that the UE timer, UE capabilities and the user preferences will need to be stored and/or determined on a per user basis. The operator preferences may be stored and/or determined on a per user basis or for a group of one or more UEs. When a new MinimumPeriodicSearchTimer parameter value is determined for a particular UE then the value will be sent to the MinimumPeriodicSearchTimer update function 570, which will cause the new parameter value to be sent to the UE, as a management object parameter.

It will be understood that the various functions and entities required to perform the present invention 500 can be implemented within a MME using appropriate software. Similarly, a conventional mobile terminal (which may be a mobile telephone, smartphone, or other mobile device) may be upgraded to be able to perform the present invention by the installation of one or more apps or other software. Suitable computer code may be deployed to such devices via download, for example via the internet, or on some physical media, for example, DVD, CD-ROM, USB memory stick, etc. for which the device has an appropriate media reader..

In summary, the present invention provides a method for more efficiently managing a mobile communications network by varying the frequency with which a mobile terminal searches for a home network.

## Claims

1. A method of operating a mobile communications network, the method comprising the steps of:
a) determining a network search parameter value for a mobile terminal, the value of the network search parameter being determined in accordance with a condition of the mobile terminal; and
b) transmitting the network search parameter value to the mobile terminal.

2. A method according to Claim 1 wherein the method comprises the further steps of;
c) periodically re-determining the value of the network search parameter; and
d) transmitting the network search parameter value determined in step c) to the mobile terminal.

3. A method according to Claim 1 wherein the condition of the mobile terminal comprises the battery level.

4. A method according to Claim 3 wherein the value of the network search parameter increases as the battery level decreases.

5. A method according to Claim 1 wherein the condition of the mobile terminal comprises one or more user-determined preferences.

6. A method according to any preceding Claim wherein the value of the network search parameter increases as the time for which the mobile terminal is connected to the mobile communications network increases.

7. A tangible data carrier for use in a computing device, the data carrier comprising computer executable code which, in use, performs a method according to any of Claims 1 to 6.

8. An apparatus for use in a mobile communications network, the apparatus, in use, being configured to
i) determine a network search parameter value for a mobile terminal, the value of the network search parameter being determined in accordance with a condition of the mobile terminal; and
ii) transmit the network search parameter value to the mobile terminal.

9. An apparatus according to Claim 8, wherein the apparatus is further configured to, in use;
iii) periodically re-determine the value of the network search parameter in accordance with a condition of the mobile terminal; and
iv) transmit the network search parameter value determined in step iii) to the mobile terminal.
